# NEW EUROPEAN PATENT SPECIFICATION

(11) **EP 0 554 758 B2**
(45) Date of publication and mention of the opposition decision: **18.04.2007**
(45) Mention of the grant of the patent: 31.03.1999
(21) Application number: 93101134.0
(22) Date of filing: 26.01.1993
(51) Int. Cl.: H04N 5/44

(54) **television or video image reproducing apparatus**
Prozessorschaltung für Fernsehsignale
Circuit processeur de signaux de télévision

(30) Priority: 31.01.1992 IT RM920070
(43) Date of publication of application: 11.08.1993
(73) Proprietor: EDICO S.r.l., 00197 Roma (IT)
(72) Inventor: d'Errico, Federico, I-00186 Roma (IT)
(74) Representative: Eisenführ, Speiser & Partner

(56) References cited:
- EP-A- 0 514 819
- EP-B1- 0 343 539
- GB-A- 2 251 755
- SIGNAL PROCESSING OF HDTV, 2, PROCEEDINGS OF THE THIRD INTERNATIONAL WORKSHOP ON HDTV, TURIN, IT 30.08-01.09 1989, ED BY L. CHIARIGLIONE 30 August 1989, AMSTERDAM NL pages 665 - 673 SAKURAI 'NTSC-HDTV Up-Converter'
- Fernseh- und Kinotechnik; 42 Jahrgang Nr. 4/1988 Seite 177-184

## Description

The present invention refers to a television or video image reproducing apparatus according to the preamble of claim 1.

As is known, it has been proposed to replace display devices of televisions, usually colour picture-tubes, that are actually of a rectangular shape with a side ratio being approximately equal to 4:3, according to the traditional shape of the cinematographic frame, with an analogue display device, having sides that are of the ratio 16:9.

It is reasonably assumed that such shape is more interesting and spectacular for the viewer; furthermore such picture ratio would consent full viewing, without image loss to the sides, of "cinemascope" films or similar panoramic formats, that with present picture-tubes are poorly reproduced, with image loss to the sides and/or with two black bands above and below the image.

However the new picture ratio poses the problem of how to represent existing programs, being of a considerable quantity, registered on film or on videotape, with the old ratio of 4:3.

It has been proposed for example to show such programs only on the central part of the new screen (reducing the horizontal deflection), leaving two black bands to the sides; such solution is not however very satisfactory, be it for the minor image size, and for the presence of lateral black bands.

It has also been proposed to show such programs on the left part of the screen and to utilise the right part for three smaller images with the known P.I.P. (picture in picture) system; such solution, even though preferable regarding certain aspects of the previous, does not however solve the problem of minor image sizes, and furthermore requires that the cost of the television be considerably greater, due to the necessary presence of the circuitry required for P.I.P., that, as known, also requires a supplementary tuner.

It has further been proposed to expand the 4:3 image until it covers the whole screen of the new ratio (increasing the vertical dimensions); however this solution involves the loss of an upper and a lower image band.

In the article "NTSC-HDTV Up-converter" by Masaru Sakurai, Proceedings of the Third International Workshop on HDTV, Turin, 30^{th} August-1^{st} September 1989 it is described the specification and hardware implementation of an NTSC-HDTV converter.

Three screen display modes, 525-1125 line scanning conversion, and frame rate conversion are discussed and examined.

While the signal processing is relatively simple, the hardware volume of the up-converter is not so small.

The present invention has the aim of demonstrating how it is possible to realise a processor circuit of television signals and proposes a solution that eliminates the abovementioned drawbacks.

The invention starts from the acknowledgement of the fact that the major drawback of the last solution mentioned (whole screen expansion of the image 4:3) lays in the fact that people may appear in the image without their heads, something that is evidently practically unacceptable. For obtaining the mentioned aim, the present invention refers to a television or video image reproducing apparatus according to claim 1.

Further aims and advantages of the present invention will result in being clear from the detailed description that follows and from the annexed drawings, supplied as a purely explanatory and non-limiting example, in which:
figure 1 represents the superimposition of an image having a side ratio being equal to 4:3 on a rectangular screen having a side ratio being equal to 16:9;
figure 2 represents the superimposition of an image having a side ratio being equal to 4:3 on a rectangular screen of a television as according to the invention;
figure 3 represents the principle diagram of the circuit of a possible realisation of a processor circuit of television signals according to the invention.

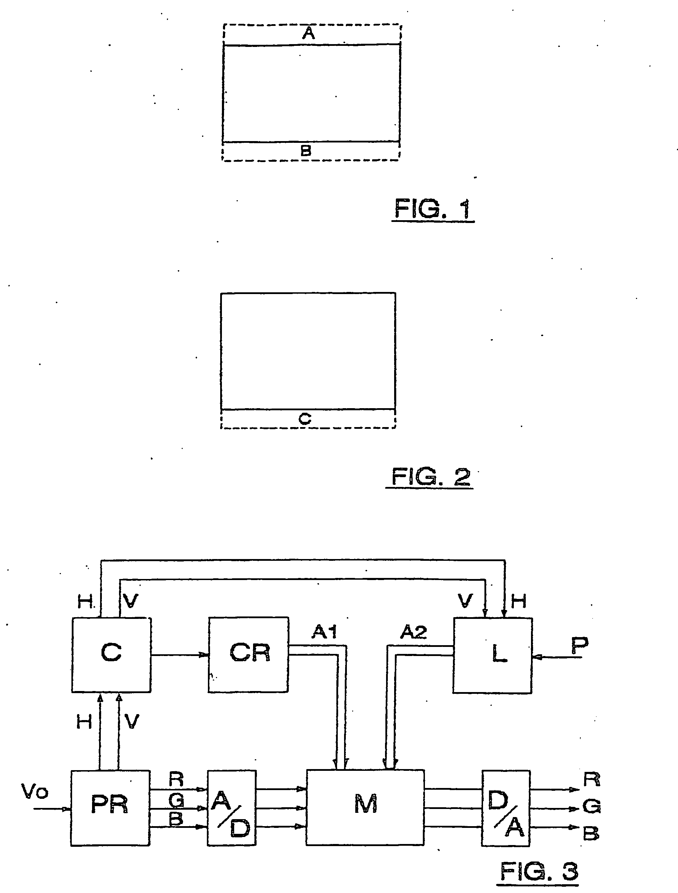

In figure 1 the superimposition of an image having a side ratio being equal to 4:3 on a rectangular screen having a side ratio being equal to 16:9 is represented; as can be seen, above and below, two image bands are lost, that together represent 25 % of the visual information. Such a loss cannot certainly be defined as irrelevant; however the worst aspect consists in that in one of the two bands an essential part of the image may be present, for example the head of one or more people.

In figure 2 that also represents the superimposition of an image having a side ratio being equal to 4:3 on a rectangular screen having a side ratio being equal to 16:9; however the image is placed below, in order that the transmitted image and display screen coincide on three sides, more precisely the two lateral edges and that above. In this way the loss is concentrated to the lower part of the image, according to the understanding that, normally such part of the image is less important than the upper; this is therefore the default condition selected by the processor circuit of television signals according to the invention.

It is however clear that it is advantageous for the user to have at his disposition a manual centring device in the vertical sense, having three positions, respectively corresponding to the coincidence with the upper edge, centred image and in coincidence with the lower edge.

Thus such a device explicitly provided for in the processor circuit of television signals according to invention, in order to consent the user to change the vertical position of the image, depending on its type.

In figure 3 the principle diagram of the circuit of a possible realisation of a processor circuit of television signals according to the invention is represented.

The incoming video signal is present at the input terminal V; it enters a processor circuit PR of a conventional type, which extracts the red (R), green (G) and blue (B) colour signals, and also the vertical (V) and horizontal (H) synchronism signals.

Obviously rather than extracting the R, G, B colour signals the luminance (Y) and colour difference (R-Y) and (B-Y) signals could be extracted.

The R, G and B colour signals reach an equal number of analogue/digital converters (A/D), that in turn supply digital exit data to a memory M of a sufficient capacity to supply a good quality coloured image.

The synchronism signals reach a clock generator, being of a multiple frequency (for example quadrupled) of that of the colour subcarrier, shown with the letter C; the latter in turn supplies a counter CR, that provides the memory M column address signals, by way of a bus A1.

The synchronism signals also reach a wired logic circuit L, that also receives position information P from a manual command device, that may be for example represented by a selector with three positions, not represented.

The logic circuit L, that could also obviously be of a monolithic realisation, or of the programmed logic technique (with a microprocessor), provides the memory M, by way of the bus A2, the line addresses and other necessary control information (R/W, OE).

Output data from the memory, elaborated by another three digital/analogue (D/A) converters are available for feeding the normal video amplifiers of the television.

During writing all transmitted television lines are written in the memory M; however during the reading phase, exclusively in the case of receiving images of a ratio 4/3, only 75 % of the memorised television lines are read; only the upper central, central or lower central portion is read depending on the position information P received by the circuit L, that, depending on the information, provides to supply the corresponding addresses to the memory during the reading phase.

In this way the image 4/3 shown on the screen 16/9 coincides respectively with the upper edge, with the central zone or with the lower edge.

It is intended that the passage from the display of an image being of a ratio 16/9 to a ratio 4/3 requires a commutation, that may be automatic, if the transmitted signal contains suitable information, or manual. Such commutation, besides activating the suppression of part of the television lines of the transmitted image, in the case of 4/3, it must also activate the increment of the vertical deflection of the image in the same ratio.

A simple modification to the circuit of figure 3 also allows for introducing manual adjustments to the amplitude of the reproduced image, allowing, if desired, to realise a compromise between the magnification of the image 4:3 and the information loss along one or both of the long sides of the image. In this way it is possible for the user, choosing according to his tastes, the amplitude or the position of the image, obtaining the best possible compromise in displaying an image of a ratio 4:3 on a screen being of a ratio 16:9.

For realising a variation of the amplitude of the image it is necessary to duplicate the clock generator (C in figure 3) and the counter (CR in figure 3) in order to be able to write in the memory at "normal" speed and read the data at a greater speed; the added clock generator (called C1) must therefore function at a variable speed (for varying the amplitude) and being however greater or equal to that of the "normal" generator C, and will be connected to its own counter (called CR1). As mentioned the memory M will be written according to the rate of the generator C and read according to the rate of the generator C1. Varying the frequency of C1 (by means of a suitable manual control device) the size of the image on the screen is modified.

The characteristics of the processor circuit of television signals described are clear from present description and annexed drawings.

It is obvious that the circuit according to the invention may be incorporated in various apparatuses, for example in a television or in a video-recorder, as in a video-disc reader. From the present description the advantages of the processor circuit of television signals object of the present invention are also clear.

In particular they are represented by the fact that normally the image 4:3 is represented without lateral black bands and without information loss in the upper part of the image, that, for the said reason, is usually the most important; furthermore the possibility for the user to choose a different centring is provided, that could be preferable in particular cases.

It is clear that numerous variants can be supplied by the man skilled in the art to the processor circuit of television signals described by way of example, without for this departing from the novelty principles inherent in the invention.

For example the manual centring system could provide a device that allows for a gradual displacement between the two extreme positions, respective correspondents, to coincide (between the transmitted image and display screen) with the upper edge or to coincide with the lower edge; such device could for example be made by means of two buttons (+ and -) that with small steps shifts upwards or downwards the image; or by means of a potentiometer type continuous system.

Moreover the memory rather than being of the digital type could be of the CCD type, in this case converters D/A and A/D would no longer be necessary.

## Claims

1. Television or video image reproducing apparatus including a processor circuit of received television or video signals, coupled to a display device being substantially rectangular, the sides of which are approximately of the ratio 16:9, **characterised in that** the processor circuit of received television or video signals includes a memory for storing all transmitted television or video lines, and means for reading from the memory and displaying over the whole of the screen a user selectable fraction of the stored television *or video* lines so as to display an image, the sides of which are approximately of ratio 4:3, wherein *the vertical deflection of the image is incremented in the same ratio, and wherein* a part of the original image is lost but there is no image information *loss* on the top or alternatively on the bottom side of the image and that manual adjustment means control the user selectable fraction so as to permit shifting the image in the vertical sense whenever the user of the reproducing apparatus so desires.

2. Apparatus according to claim 1, **characterised in that** the image 4:3 is displayed so as that the two lateral edges and the upper edge of the transmitted image substantially coincide with the lateral edges and the upper edge of the display screen (Fig. 2).

3. Apparatus according to claim 1 or 2, **characterised in that** manual adjustment means for varying the magnification of the image are provided, for whenever the user so desires.

4. Apparatus according to claim 2, **characterised in that** the coincidence of the upper edge of the image with the upper edge of the display screen is obtained by shifting the image downwards by an opportune quantity.

5. Apparatus according to claim 4, **characterised in that** said downward displacement is electronically obtained by dephasing the image information in respect to the deflection of the electronic spot.

6. Apparatus according to claim 1, **characterised in that** said manual means consent three positions, corresponding to the coincidence of the upper edge, to the vertical centring ol the image and to the coincidence of the lower edge.

7. Apparatus according to claim 1, **characterised in that** said manual means permit a gradual adjustment of the vertical position of the image between the two extreme conditions, corresponding respectively to the coincidence of the upper edge, or to the coincidence of the lower edge.

8. Apparatus according to claim 1, **characterised in that** during the rereading operation only about the 75 % of the original lines constituting the transmitted image are selectively read.

9. Apparatus according to claim 1, **characterised in that** said manual means include two buttons (+, -) for shifting upwards and downwards the vertical position of the image in small quantities.

## Patentansprüche

1. Fernseh- oder Video-Bildwiedergabevorrichtung, mit einer Verarbeitungsschaltung für empfangene Fernseh- oder Video-Signale, welche einer im wesentlichen rechtwinklige Anzeigevorrichtung eingekoppelt werden, wobei deren Seiten etwa das Verhältnis 16:9 aufweisen,
**dadurch gekennzeichnet, daß** die Verarbeitungsschaltung der empfangenen Fernseh- oder Video-Signale einen Speicher zum Speichern sämtlicher gesendeten Fernseh- oder Video-Zeilen beinhaltet, und eine Einrichtung zum Lesen aus dem Speicher und Anzeigen eines benutzer-wählbaren Teiles der gespeicherten Fernseh- oder Video-Zeilen auf dem gesamten Bildschirm, um ein Bild anzuzeigen, dessen Seiten ein Verhältnis von etwa 4:3 aufweisen, wobei die vertikale Ablenkung des Bildes in dem gleichen Verhältnis erhöht wird und wobei ein Teil des Ursprungsbildes verloren geht, jedoch kein Bildinformationsverlust an der oberen oder alternativ an der unteren Seite des Bildes auftritt, und daß eine manuelle Anpassungseinrichtung das benutzerselektierte Teil steuert, um ein Verschieben des Bildes in der vertikalen Richtung zu erlauben, wann immer der Benutzer der Wiedergabevorrichtung dieses wünscht.

2. Vorrichtung nach Anspruch 1,
**dadurch gekennzeichnet, daß** das 4:3-Bild so angezeigt wird, daß die zwei seitlichen Ränder und der obere Rand des gesendeten Bildes im wesentlichen mit den seitlichen Rändern und dem oberen Rand des Anzeigebildschirms übereinstimmen (Figur 2).

3. Vorrichtung nach Anspruch 1 oder 2,
**dadurch gekennzeichnet, daß** eine manuelle Anpassungseinrichtung zum Verändern der Vergrößerung des Bildes, wann immer der Benutzer dieses wünscht, vorgesehen ist.

4. Vorrichtung nach Anspruch 2,
**dadurch gekennzeichnet, daß** die Übereinstimmung des oberen Randes des Bildes mit dem oberen Rand des Anzeigebildschirms durch Verschieben des Bildes abwärts um einen geeigneten Betrag erhalten wird.

5. Vorrichtung nach Anspruch 4,
**dadurch gekennzeichnet, daß** der abwärts gerichtete Versatz elektronisch erhalten wird durch Phasenverschieben der Bildinformation, bezogen auf die Ablenkung des Elektronenpunktes.

6. Vorrichtung nach Anspruch 1,
**dadurch gekennzeichnet, daß** die manuelle Einrichtung drei Positionen aufweist, entsprechend der Übereinstimmung des oberen Randes, der vertikalen Zentrierung des Bildes und der Übereinstimmung des unteren Randes.

7. Vorrichtung nach Anspruch 1,
**dadurch gekennzeichnet, daß** die manuelle Einrichtung eine allmähliche Anpassung der vertikalen Position des Bildes zwischen zwei Extrem-Bedingungen entsprechend der Übereinstimmung des oberen Randes oder der Übereinstimmung des unteren Randes erlaubt.

8. Vorrichtung nach Anspruch 1,
**dadurch gekennzeichnet, daß** während des erneuten Lesevorgangs nur etwa 75% der ursprünglichen Zeilen, welche das gesendete Bild bilden, selektiv gelesen werden.

9. Vorrichtung nach Anspruch 1,
**dadurch gekennzeichnet, daß** die manuelle Einrichtung zwei Knöpfe (+, -) zum Aufwärts- und Abwärtsverschieben der vertikalen Position des Bildes um kleine Beträge beinhaltet.

## Revendications

1. Dispositif de reproduction d'image de télévision ou vidéo comprenant un circuit processeur de signaux de télévision ou vidéo reçus, couplé à un dispositif d'affichage sensiblement rectangulaire, dont les côtés ont approximativement un rapport de 16:9,
**caractérisé en ce que**
le circuit processeur de signaux de télévision ou vidéo reçus comprend une mémoire destinée à stocker l'ensemble des lignes de télévision ou vidéo et des moyens destinés à lire dans la mémoire et à afficher sur la totalité de l'écran une fraction pouvant être choisie par l'utilisateur des lignes de télévision ou vidéo stockées, de façon à afficher une image dont les côtés ont approximativement un rapport de 4:3, dans lequel la déviation verticale de l'image est incrémentée dans le même rapport et dans lequel une partie de l'image d'origine est perdue mais où il n'y a aucune perte de contrôle des informations d'image de la fraction pouvant être choisie par l'utilisateur alternativement du côté haut ou bas de l'image et **en ce que** des moyens de réglage manuel permettent de décaler l'image dans le sens vertical à chaque fois que l'utilisateur du dispositif de reproduction le désire.

2. Dispositif selon la revendication 1, **caractérisé en ce que** l'image 4:3 est affichée de façon que les deux bords latéraux et le bord supérieur de l'image transmise coïncident sensiblement avec les bords latéraux et le bord supérieur de l'écran d'affichage (figure 2).

3. Dispositif selon la revendication 1 ou 2, **caractérisé en ce que** des moyens de réglage manuel destinés à faire varier l'agrandissement de l'image sont fournis, à chaque fois que l'utilisateur le désire.

4. Dispositif selon la revendication 2, **caractérisé en ce que** la coïncidence du bord supérieur de l'image avec le bord supérieur de l'écran d'affichage est obtenue en décalant l'image vers le bas d'une quantité opportune.

5. Dispositif selon la revendication 4, **caractérisé en ce que** ledit déplacement vers le bas est obtenu électroniquement en déphasant les informations d'image par rapport à la déviation du spot électronique.

6. Dispositif selon la revendication 1, **caractérisé en ce que** lesdits moyens manuels comprennent trois positions, correspondant à la coïncidence du bord supérieur, au centrage vertical de l'image et à coïncidence du bord inférieur.

7. Dispositif selon la revendication 1, **caractérisé en ce que** les moyens manuels permettent un réglage progressif de la position verticale de l'image entre les deux états extrêmes, correspondant respectivement à la coïncidence du bord supérieur ou à la coïncidence du bord inférieur.

8. Dispositif selon la revendication 1, **caractérisé en ce que**, pendant l'opération de rafraîchissement, seules environ 75% des lignes d'origine constituant l'image transmise sont lues de façon sélective.

9. Dispositif selon la revendication 1, **caractérisé en ce que** lesdits moyens manuels comprennent deux boutons (+, -) destiné à décaler vers le haut et vers le bas la position verticale de l'image, par petites quantités.
